# EUROPÄISCHE PATENTSCHRIFT

(11) **EP 1 228 252 B1**
(45) Veröffentlichungstag und Bekanntmachung des Hinweises auf die Patenterteilung: **31.03.2004**
(21) Anmeldenummer: 00966148.9
(22) Anmeldetag: 10.10.2000
(51) Int. Cl.: C21C 5/54

(54) **VERFAHREN UND EINRICHTUNG ZUR EINHÜLLUNG EINES LICHTBOGENS**
METHOD AND DEVICE FOR ENCLOSING AN ELECTRIC ARC
PROCEDE ET DISPOSITIF PERMETTANT D'ENVELOPPER UN ARC ELECTRIQUE

(30) Priorität: 13.10.1999 DE 19949330
(43) Veröffentlichungstag der Anmeldung: 07.08.2002
(73) Patentinhaber: SMS Demag AG, 40237 Düsseldorf (DE)
(72) Erfinder: UEBBER, Norbert, 40764 Langenfeld (DE); REICHELT, Wolfgang, 47447 Moers (DE); MONHEIM, Peter, 46284 Dorsten (DE); GRUND, Guido, 46282 Dorsten (DE)
(74) Vertreter: Valentin, Ekkehard, Dipl.-Ing.
(86) Internationale Anmeldenummer: PCT/EP2000/009937
(87) Internationale Veröffentlichungsnummer: WO 2001/027338

(56) Entgegenhaltungen:
- EP-A- 0 637 634
- EP-A- 0 692 544
- DD-A- 228 831
- US-A- 5 557 631
- BUYDENS J M ET AL: "THE DYNAMIC CONTROL OF THE SLAG FOAMING OPERATION IN THE ELECTRIC ARC FURNACE" CAHIERS D'INFORMATIONS TECHNIQUES DE LA REVUE DE METALLURGIE,FR,REVUE DE METALLURGIE. PARIS, Bd. 95, Nr. 4, 1. April 1998 (1998-04-01), Seiten 501-510, XP000755693 ISSN: 0035-1563

## Beschreibung

Die Erfindung betrifft ein Verfahren zur Einhüllung eines in einem Lichtbogenofen brennenden Lichtbogens mittels Schaumschlacke, die durch Einbringung von Kohlenstoffträgern in die oberhalb des Stahlbades sich befindende Schlacke gebildet wird, wobei die Schallemission erfasst und zur Steuerung des Einbringens der Schäumkohle verwendet wird.

Beim Betrieb eines Elektrolichtbogenofens ist man bestrebt, die Abstrahlverluste der Elektroden zu minimieren. Um den Anteil der vom Lichtbogen abgestrahlten Energie möglichst in das Schmelzgut einzuleiten, ist es bekannt, die auf der Metallschmelze aufschwimmenden Schlacke aufzuschäumen und die Lichtbögen mit der Schaumschlacke zu umhüllen. Als Medien zum Aufschäumen der Schlacke werden Kohlenstoffträger in den Ofen eingebracht, wobei durch zusätzlich eingeblasenen Sauerstoff der Kohlenstoff verbrannt wird und das dabei entstehende Kohlenstoffgas zur Bildung der Schaumschlacke beiträgt.

Hierbei wird insgesamt eine optimale Schlackenhöhe angestrebt, denn bei zu geringer Schaumschlackenhöhe sind die Abstrahlverluste zu hoch und bei zu hoher Schlackenmengenbildung treten bei der Abfuhr aus dem Ofen zu große Energieverluste auf. Außerhalb der optimalen Schlackenmenge verschlechtert sich also die Energiebilanz.

Aus DD 228 831 A1 ist ein Verfahren zur Einhüllung des Lichtbogens in Elektrolichtbogenöfen bekannt, bei dem die vom Lichtbogen verursachte Schallemission gemessen, mit vorgegebenen Grenzwerten verglichen und bei Überschreitung der Grenzwerte durch eine geeignete Vorrichtung solange ein Kohlenstoffträger in den Ofen direkt in die Ofenschlacke injiziert wird, bis eine Unterschreitung des vorgegebenen Schallgrenzwertes festgestellt wird.

In diesem Dokument ist weder im Hauptanspruch noch im Ausführungsbeispiel dargelegt, welche "geeigneten" Meßinstrumente für die Schallemission eingesetzt werden, und auch nicht, in welchen vorgegebenen Zeitintervallen diese Emission erfasst und quantifiziert werden. Es wird lediglich angeführt, daß der Einhüllungsgrad des Lichtbogenofens durch die Zugabeintensität des Kohlenstoffträgers bestimmt wird, die vom Bedienungspersonal bislang nach subjektiver Einschätzung bzw. auf der Basis betriebsspezifischer Festlegungen gesteuert wurde. Es wird allenfalls angedeutet, den Einhüllungsgrad nunmehr quasi zu automatisieren. Eine nacharbeitbare Lehre zum technischen Handeln ist aber nicht vorgegeben worden.

Aus EP 0 692 544 ist ein Verfahren zur Steuerung der Schaumschlackebildung in Drehstromlichtbogenöfen bekannt, bei dem frequenzselektiv eine Auswertung der Amplitude durchgeführt wird und beim Überschreiten eines durch eine Steuereinheit vorgebbaren Schallpegels Einfluss auf die Durchsatzrate an Kohlenstoff genommen wird. Nachteil des Gegenstandes dieses Dokumentes ist die Beschränkung auf einzelne Frequenzen mit positiven Auswirkungen auf die Signifikanz und das Signal/Rausch-Verhältnis.

Aus der EP 0 637 634 A1 ist ein Verfahren zum Herstellen einer Metallschmelze bekannt. Hierbei soll während einer Ofencharge mehrmals eine Pegelmessung der Schichthöhe einer Schlacke durchgeführt werden und die Schichthöhe geregelt werden, so daß sich die Schaumschlacke mindestens über den gesamten Lichtbogen erstreckt. Hierbei können für die Pegelmessung aus dem Elektro-Lichtbogenofen stammende Schallemissionen herangezogen werden. Es wird beschrieben, daß zunächst das gesamte Frequenzspektrum des Ofengeräuschs ermittelt wird und danach der Schallpegel innerhalb eines für das Schlackenschaumen charakteristischen Frequenzbereichs. Als charakteristisch für die Schaumschlackenbildung wird ein Frequenzbereich von 100 bis 500 Hz ermittelt.

Aus Buydens J. M. et al: "The Dynamic Control of the slag Foaming Operation in the electric Arc Furnace", La Revue de Metallurgie-CIT, April 1998, S. 501 ff wird die Schlackenführung ebenfalls durch akustische Eigenschaften geregelt. Es wird erwähnt, daß die Signale in einem großen Frequenzband (von 0 bis 5 000 Hz) ermittelt werden, um charakteristische Frequenzbereiche zu ermitteln, die mit der Schaumschlacke verbunden sind. Hierbei wurde festgestellt, daß der Frequenzbereich von 350 bis 400 Hz der günstigste Frequenzbereich ist, um das Schaumschlackenverhalten abzuschätzen.

Aufgabe der vorliegenden Erfindung ist es, ein Verfahren zur Einhüllung eines in einem Lichtbogenofen brennenden Lichtbogens zu schaffen und mit konstruktiv einfachen Mitteln das Schaumschlackevolumen unter besonderer Berücksichtigung der Höhe sicher einzustellen.

Die Erfindung löst diese Aufgabe mit den Merkmalen des Anspruchs 1. Die weiteren Ansprüche sind vorteilhafte Weiterbildungen der Erfindung.

Akustische Empfindungen, basierend auf den Schallemissionen eines Lichtbogens in einem Lichtbogenofen, werden von den Schmelzern maßgeblich zur Bewertung von Schaumschlackezuständen im Ofen herangezogen. Bei diesen Schallemissionen eines Lichtbogenofens ist wesentlich zu unterscheiden zwischen einem "Brummen" und einem "Krachen".

Beim "Brummen" handelt es sich um ein zyklisches Zünden der Lichtbögen, basierend auf der Versorgungsfrequenz des Ofens.

Beim "Krachen", welches mit dem Knall eines in der Nähe einschlagenden Blitzes vergleichbar ist, handelt es sich um eine spontane Ausbildung eines Plasmakanals und der damit verbundenen Druckwelle. Da sich im Lichtbogenofen die Zündbedingungen der Lichtbögen ständig und in zufälliger Weise ändern, kommt es ebenfalls ständig und in zufälliger Weise zum Neuausbilden von Plasmakanälen und damit zu definierten Geräuschen.

Das Brummen äußert sich im Amplitudenspektrum des Schalls in der Weise, dass sich im Bereich von 100 Hz eine Reihe von harmonischen Vielfachen dieser Frequenz markante Amplituden herausbilden. Die Amplituden dieser harmonischen Frequenz werden jedoch mit größerer Frequenz rasch so klein, daß sie im Pegel der anderen Geräusche nicht mehr wahrgenommen werden können.

Überraschenderweise wurde festgestellt, dass das Amplitudenspektrum der Ausbildung der Plasmakanäle und damit des "Krachens" sich nicht auf einzelne Frequenzen beschränkt. Die Amplituden der als Krachen wahrgenommenen Schallemission sind über einen weiten Bereich diffus verteilt. Die Gesamtheit der Amplituden, die mit dem Krachen verbunden sind, stellt eine höhere Signifikanz zum Schaumschlackenzustand dar, als dies bei den harmonischen Frequenzen oder einer Auswahl dieser Frequenz der Fall ist. Bekanntlich wird eine Frequenz als Ton und mehrere Einzelfrequenzen als Klang bezeichnet. Im Gegensatz hierzu sind bei Geräuschen die Amplituden im Frequenzbereich stochastisch verteilt.

Erfindungsgemäß wird das Amplitudenspektrum des Schalls in der Ausbildung als Krachen ermittelt. Die mit dem Krachen verbundenen Amplituden werden in einem Zeitbereich als Signalpegel erfasst und nach Fast-Fourier-Transformation umgewandelt in Signalpegel im Frequenzbereich. Die die Krachgeräusche charakterisierenden Amplituden werden einer Recheneinheit zugeführt und in dieser Recheneinheit werden diese Meßwerte zur Bewertung der Schaumschlacke herangezogen. Hierzu werden die Amplituden vorzugsweise nach der sogenannten A-Bewertung (die A-Bewertung entspricht dabei dem menschlichen Hörempfinden) eines bestimmten diskreten Frequenzbereichs auf ein ähnliches Niveau gebracht. Anschließend wird ein Signifikanzbereich selektiert. Die Amplituden in diesem Frequenzbereich, der vorzugsweise größer als 200 Hz und vorzugsweise im Bereich unter 1000 Hz liegen sollte, werden über diesen Frequenzbereich integriert. Bei Über- oder Unterschreiten eines vorgebbaren Wertes des Schlackenzustandes und der Schlackenhöhe werden die auf dem Krachen basierenden Meßwerte zur Steuerung der Mengenzufuhr der Schäumkohle eingesetzt.

In vorteilhafter Weise kann die Gesamtheit dieses Amplitudenspektrums "Krachen" in der Weise genutzt werden, dass durch Mittelung über den Frequenzbereich das Signal/Rausch-Verhältnis weiter verbessert wird. Besonders effizient wird eine solche Mittelung über den Frequenzbereich, wenn die mit dem Krachen verbundenen Pegel im Frequenzbereich so bewertet werden, daß sie auf einem ähnlich hohen Niveau liegen.

Die besonders hohe Signifikanz und das große Signal/Rausch-Verhältnis werden genutzt, über die Menge des Schäumkohleeinbringens hinaus mit hoher Auflösung auch das richtige Positionieren der Schäumkohlelanze zu bewerten und für eine Steuerung zu nutzon.

Das Krachen wird durch außerhalb des Ofens in geschützter Lage angebrachte Richtmikrophone gerichtet erfasst. Die dieses Krachen ermittelnden Meßwerte werden als Meßsignale symmetrisch geführt und sind somit durch Störsignale nahezu unbelastet.

Die bei der Durchführung des Verfahrens eingesetzten Richtmikrophone sind vorzugsweise übertragerfreie Kondensatormikrophone.

Weiterhin wird der Bedienungsmannschaft der Ist-Zustand der Schaumschlacke aufgezeigt, und zwar aktuell durch Monitore und durch Einsatz von Rechnern, bei denen die Historie jederzeit abrufbar ist. Hierdurch wird es möglich, den Trend des Schaumschlackevolumens rechtzeitig zu erkennen und vor Überoder Unterschreiten eines Schwellwertes bereits Maßnahmen zu treffen.

Ein Beispiel der Erfindung ist in der beigefügten Zeichnung dargelegt. Dabei zeigen
- Figur 1: Eine Skizze der Ofenanlage.
- Figur 2: Die Signalverarbeitung.
- Figur 3: Ein Beispiel einer Signalerfassung über einen vorgegebenen Zeitraum.

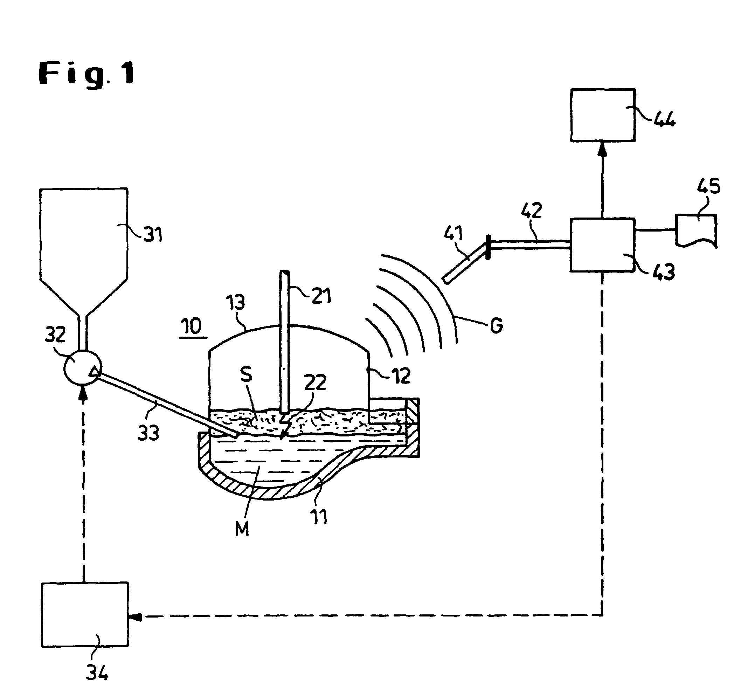

Die Figur 1 zeigt einen Lichtbogenofen 10, der einen Ofenuntergefäß sowie ein durch einen Deckel 13 geschlossenes Ofenobergefäß 12 aufweist. Durch den Deckel 13 ist mindestens eine Elektrode 21 geführt. Zwischen der Elektrode 21 und der metallischen Schmelze M brennt ein Lichtbogen 22. Der Lichtbogen 22 ist durch die Schaumschlacke S abgedeckt.

Außerhalb des Ofens werden die Geräusche G von einem Richtmikrophon 41 erfaßt. Das Richtmikrophon 41 ist über die Verbindungsmeßleitungen 42 mit einer Recheneinheit 43 verbunden. Die Ausgänge des Mikrophons 41, sowie die Verbindungsmeßleitungen 42 sollen symmetrisch sein, die Eingänge der Recheneinheit 43 differentiell.

Die Recheneinheit 43 ist mit einem Stellglied 34 steuerungsmäßig verknüpft, welches mit einem Aktuator 32 verbunden ist. Dieser Aktuator 32 ist regelmäßig eine Pumpe, die aus einem Vorratsbehälter 31 Kohlenstoffträger über eine Zuführleitung 33 sowie eine Lanze in den Ofen 10 fördert.

Die Recheneinheit 43 ist darüber hinaus mit einem Monitor 44, zur aktuellen Anzeige des Ist-Zustandes des Schaumschlackevolumens bzw. -höhe, und mit einem Drucker 45 verbunden, über den über beliebige Zeiträume die Tendenz der Geräuschentwicklung dokumentiert werden kann.

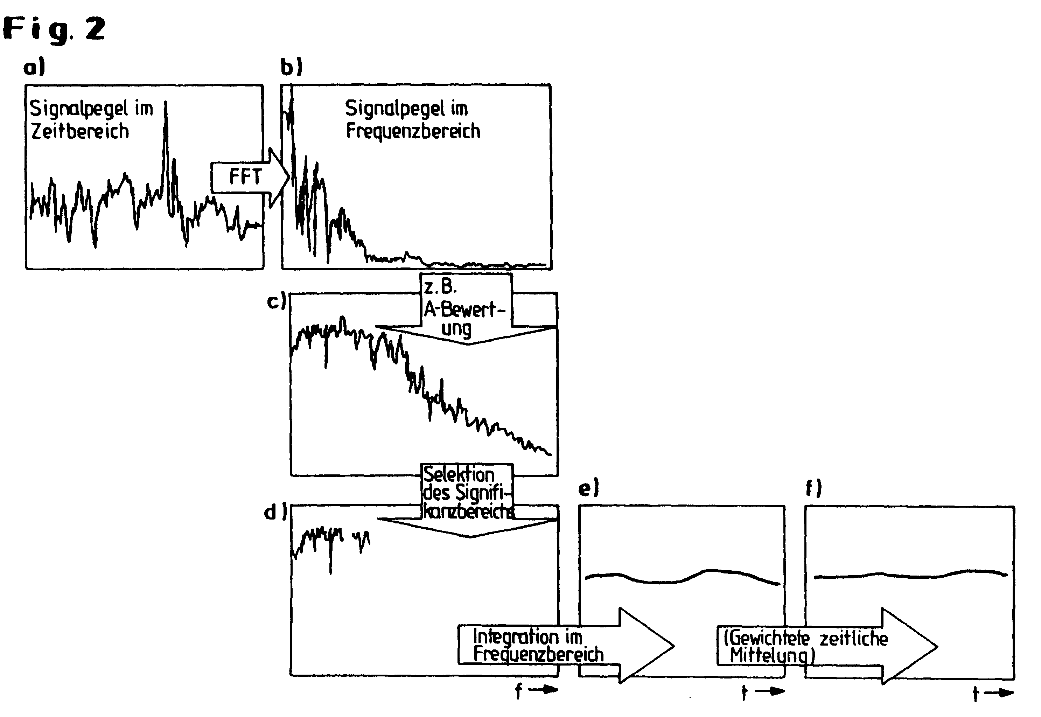

Die Figur 2 zeigt die Signalverarbeitung des Schallsignals zur Schaumschtakkedetektierung. Dabei zeigt das Diagramm a den Signalpegel im Zeitbereich. Über eine Fast-Fourier-Transformation gelangt man zum Diagramm b, welches den Signalpegel im Frequenzbereich aufzeigt. Durch eine Bewertung, beispielsweise durch eine A-Bewertung gelangt man zum Diagramm c, welches die Amplituden, die mit dem Krachen verbunden sind, auf ein relativ ähnliches Niveau bringen. Durch die Selektion eines Signifikanzbereiches gelangt man zum Diagramm d. Durch Integration im Frequenzbereich wird eine Vergleichmäßigung des Signalpegels erreicht. Ergänzend kann eine gerichtete zeitliche Ermittlung durchgeführt werden, die im Diagramm f dargestellt ist.

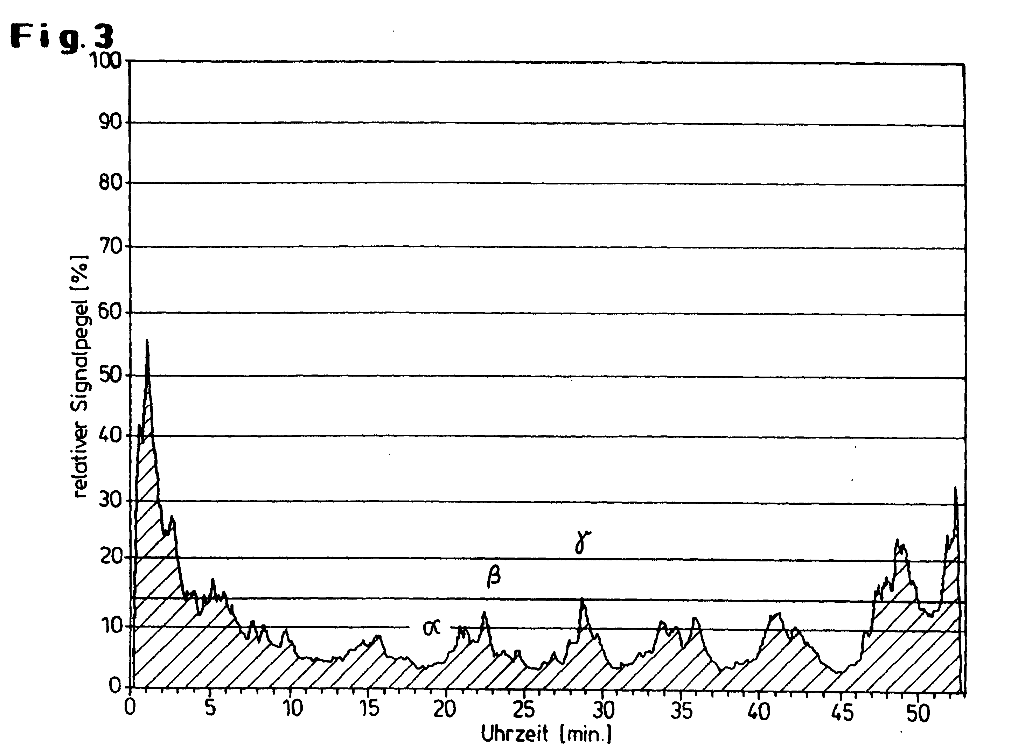

In der Figur 3 ist ein relativer Signalpegel über einen Zeitraum von 40 min. dargestellt. Insgesamt sind drei Bereiche angegeben, und zwar
- α,: bei dem die Lichtbögen von der Schlacke sicher abgedeckt sind,
- β,: bei dem die Lichtbögen weitgehend abgedeckt sind. Es handelt sich hier um einen beliebig festgelegten Zwischenbereich
- γ,: bei dem die Lichtbögen nicht bedeckt sind.
Es handelt sich hier um einen Originalschrieb, der deutlich zeigt, daß das Verhalten der Schlacke eindeutig erkennbar ist und zwar in einem Zeitverhalten, bei dem sicher eingegriffen werden kann und Gegenmaßnahmen zur Verfügung stehen.

### Positionsliste

### Lichtbogenofen

- 10: Lichtbogenofen
- 11: Ofenuntergefäß
- 12: Ofenobergefäß
- 13: Deckel

### Strom

- 21: Elektrode
- 22: Lichtbogen

### Kohlenträger

- 31: Vorratsbehälter
- 32: Aktuator
- 33: Zufuhrleitung
- 34: Stellglied

### Geräusch

- 41: Richtmikrophon
- 42: Verbindungsmeßleitung
- 43: Recheneinheit
- 44: Monitor
- 45: Drucker

- S: Schäumschlacke
- M: Metallische Schmelze
- G: Geräusche

## Patentansprüche

1. Verfahren zur Einhüllung eines in einem Lichtbogen brennenden Lichtbogens mittels Schaumschlacke, die durch Einbringung von Kohlenstoffträgem in die oberhalb des Stahlbades sich befindende Schlacke gebildet wird, wobei die Schallemission erfaßt und zur Steuerung des Einbringens der Schäumkohle verwendet wird,
wobei
a) es wird das Amplitudenspektrum des Schalls in der Ausbildung als Krachen ermittelt,
b) die Amplituden, die mit dem Krachen verbunden sind, werden bewertet auf ein ähnliches Niveau gebracht und einer Recheneinheit zugeführt, wobei die Transformation der das Krachen repräsentierenden Amplituden im Frequenzbereich auf ein ähnliches Niveau mittels der A-Bewertung erfolgt,
c) in der Recheneinheit werden die bewerteten Meßwerte zur Steuerung der Schaumschlacke herangezogen und bei Über- oder Unterschreiten eines vorgebbaren Wertes zur Beeinflussung der Mengenzufuhr an Kohlenstoffträgern zum Aufschäumen der Schlacke eingesetzt.

2. Verfahren nach Anspruch 1,
**dadurch gekennzeichnet,**
**daß** durch Mittelung der bewerteten Amplituden über einen vorgebbaren Frequenzbereich ein Fegel gebildet wird, der das Krachen und damit die Einhüllung der Lichtbögen durch Schaumschlacke repräsentiert.

3. Verfahren nach Anspruch 2,
**dadurch gekennzeichnet,**
**daß** ein Frequenzbereich zwischen 200 bis 1.000 Hz gewählt wird.

4. Verfahren nach mindestens einem der vorgenannten Ansprüche,
**dadurch gekennzeichnet,**
**daß** der Trend der die Amplituden betreffenden Signale erfaßt und zur Steuerung der Rate an zugeführten Kohlenstoffträgem verwendet wird.

5. Verfahren nach Anspruch 1,
**dadurch gekennzeichnet,**
**daß** bei Über- oder Unterschreiten eines vorgebbaren Wertes Einfluß auf die Positionierung der Kohlenstoffblaslanze genommen wird.

## Claims

1. Method of enveloping an arc, which is burning in an arc [furnace], by means of foamed slag, which is formed by introducing carbon carriers into the slag disposed above the steel bath, wherein the emission of sound is detected and used for control of the introduction of the foaming carbon, wherein
a) the amplitude spectrum of the sound in the forming is detected as cracking,
b) the amplitudes connected with the cracking are evaluated, brought to a similar level and fed to a computer unit, wherein the transformation of the amplitudes, which represent the cracking, in the frequency range to a similar level is carried out by means of A evaluation and
c) the evaluated measurement values are utilised in the computer unit for control of the foamed slag and, in the case of exceeding or falling below a presettable value, are employed for influencing the quantity feed of carbon carriers for foaming the slag.

2. Method according to claim 1, **characterised in that** a level which represents the cracking and thus the enveloping of the arc by foamed slag is formed by averaging the evaluated amplitudes over a presettable frequency range.

3. Method according to claim 2, **characterised in that** a frequency range between 200 to 1,000 Hz is selected.

4. Method according to at least one of the aforesaid claims, **characterised in that** the trend of the signals relating to the amplitudes is detected and is used for controlling the rate of fed carbon carriers.

5. Method according to claim 2, **characterised in that** in the case of exceeding or falling below a presettable value influence is taken on the positioning of the carbon blow lance.

## Revendications

1. Procédé d'enveloppement d'un arc électrique allumé dans un arc électrique au moyen d'une scorie mousseuse qui est formée en intégrant des entraîneurs au carbone dans la scorie se trouvant au dessus du bain d'acier, l'émission acoustique étant enregistrée et utilisée pour contrôler l'incorporation du charbon de moussage,
a) le spectre d'amplitude du son étant déterminé sous la forme de claquements,
b) les amplitudes qui sont liées au claquement étant mises une fois évaluées à un même niveau et communiquées à une unité numérique, la transformation des amplitudes représentant le claquement ayant lieu dans la plage de fréquence à un niveau identique au moyen de l'évaluation A,
c) les valeurs de mesure étant, dans l'unité numérique, utilisées pour contrôler la scorie mousseuse et mises en oeuvre, en cas de dépassement ou de sous-dépassement d'une valeur prescriptible, pour influer sur l'alimentation quantitative en entraîneurs de carbone servant à faire mousser la scorie.

2. Procédé selon la revendication 1, **caractérisé en ce qu**'en déterminant une moyenne des amplitudes évaluées sur une plage de fréquence prescriptible, il est constitué une échelle qui représente le claquement et donc l'enveloppement des arcs électriques par de la scorie mousseuse.

3. Procédé selon la revendication 2, **caractérisé en ce qu'**une plage de fréquence allant de 200 à 1.000 Hz est choisie.

4. Procédé selon au moins l'une quelconque des revendications précédentes, **caractérisé en ce que** la tendance des signaux concernant les amplitudes est enregistrée et utilisée pour contrôler le taux d'entraîneurs de carbone acheminés.

5. Procédé selon la revendication 1, **caractérisé en ce qu'**en cas de dépassement ou de sous-dépassement d'une valeur prescriptible, on intervient au niveau du positionnement de la lance de soufflage de carbone.
